# EUROPÄISCHE PATENTSCHRIFT

(11) **EP 0 453 990 B1**
(45) Veröffentlichungstag und Bekanntmachung des Hinweises auf die Patenterteilung: **20.11.1996**
(21) Anmeldenummer: 91106320.4
(22) Anmeldetag: 19.04.1991
(51) Int. Cl.: B29D 7/00, B29C 47/08, B29C 47/06

(54) **Verfahren und Vorrichtung zur Herstellung von Formkörpern aus thermotropen, flüssigkristallinen Stoffen**
Method and apparatus for fabricating mouldings of thermotropic liquid crystalling materials
Procédé et dispositif pour fabriquer des pièces moulées en matières thermotropes, en cristal liquide

(30) Priorität: 27.04.1990 DE 4013553
(43) Veröffentlichungstag der Anmeldung: 30.10.1991
(73) Patentinhaber: HOECHST AKTIENGESELLSCHAFT, 65926 Frankfurt am Main (DE)
(72) Erfinder: Dinter, Peter, Dipl.-Ing., W-6227 Hallgarten (DE)

(56) Entgegenhaltungen:
- AT-B- 389 673
- DE-A- 3 219 092
- DE-A- 3 603 432
- DE-A- 3 604 829

## Beschreibung

Die Erfindung betrifft ein Verfahren und eine Vorrichtung zur Herstellung von Formkörpern aus thermotropen, flüssigkristallinen Kunststoffen mit definierter Orientierung der Ketten der LC-Polymermoleküle in mindestens zwei voneinander unabhängigen Vorzugsrichtungen, wobei der Polymer-Massestrom in zwei Teilströme aufgeteilt wird, denen Kräfte in der Weise aufgeprägt werden, daß die LC-Polymerketten des ersten Teilstroms nur in eine Vorzugsrichtung orientiert sind und die LC-Polymerketten des zweiten Teilstroms gegenüber denjenigen des ersten Teilstroms in zumindest eine andere davon abweichende Vorzugsrichtung orientiert sind und die beiden Teilströme vor dem Eintritt in eine Düse zusammengeführt werden.

Ein derartiges Verfahren ist aus der DE-A-36 04 829 bekannt; gemäß der flächiges, thermoplatisch verformbares Halbzeug auf Basis von flüssig-kristallinen Polymeren hergestellt wird. Das Halbzeug besteht aus zwei oder mehreren Schichten, in denen das Polymer in unterschiedlichen Richtungen orientiert ist. Eine hierfür geeignete Vorrichtung ist in der DE-A-36 03 432 beschrieben.

Das bekannte Verfahren sowie die zur Durchführung des Verfahrens geeignete Vorrichtung liefern Teilströme, die in unterschiedlichen Schichten zu einem einheitlichen Schmelzestrom zusammengeführt werden. Die physikalischen Eigenschaften des daraus extrudierten Halbzeugs werden von den unterschiedlich orientierten Makromolekülen in diesen Schichten bestimmt. Ein isotropes Eigenschaftsprofil wird nicht erhalten.

Thermotrope, flüssigkristalline Polymere erlangen für die Kunststoffverarbeitung steigende Bedeutung. Bei diesen Produkten handelt es sich um voll- oder teilaromatische Polykondensate, wie Polyester, Polyesteramide, Polyetherester, Polyestercarbonate, Polyesteramideimide und ähnliche Polymere. Ein Charakteristikum der thermoplastischen Verarbeitung vorgenannter Polymere besteht darin, daß bei Einwirkung von Dehn- und Scherströmungen auf die flüssigkristalline Schmelze deren Molekülketten gezielt orientiert werden können. Dieser Effekt beinhaltet mithin die Möglichkeit, je nach Orientierungsgrade sowohl Produkte mit isotropen als auch anisotropen mechanischen Eigenschaften zu fertigen. Der in Praxis am ehesten auftretende Fall eines anisotropen Verhaltens resultiert aus einer monoaxialen Verformung des Schmelzefilms beim Herauspressen aus einer Düse, wobei dem Formkörper eine Vorzugsorientierung in Längsrichtung des Formkörpers, beispielsweise einer Folienbahn, aufgeprägt wird. Die Folge davon sind im allgemeinen hervorragende Festigkeitseigenschaften in Längsrichtung, die aber zu Lasten des Eigenschaftsprofils in Querrichtung gehen. Bei flächigen Gebilden, wie etwa Folien oder Platten, wird in Querrichtung ein Spleißen beobachtet, wenn äußere mechanische Kräfte senkrecht zur Vorzugsorientierungsrichtung angreifen. Eine Folie bzw. eine Platte mit einem derartigen Verhalten besitzt für den praktischen Einsatz nur einen eingeschränkten Gebrauchswert.

Aus der DE-A - 36 03 995 ist ein Verfahren zur Herstellung von Teilen aus thermotropen, flüssigkristallinen Kunststoffen mit definierter Orientierung der LC-Polymermoleküle in mindestens zwei voneinander unabhängigen Vorzugsrichtungen bekannt, in dem der thermoplastische Massestrom durch eine Düse extrudiert wird. Dabei wird der Massestrom mindestens zeitweise beim Durchströmen der Düse mittels der über die Form der Begrenzungsflächen aufgeprägten Kräfte in zwei oder mehr vorgegebenen Richtungen Dehnungen zur Ausrichtung der Kettenmoleküle unterworfen. Die Dehnung in x-Richtung wird über die Vorgabe des Abstandes der Begrenzungsflächen in einer vorgegebenen Richtung eingestellt. Die Dehnung in Fließrichtung ist dabei durch vorgegebene Funktionen, in die Geometrieparameter eingehen, festgelegt. Die Dehnung in y-Richtung ist gleichfalls durch eine bestimmte Funktion mit Geometrieparametern festgelegt. Bei diesem bekannten Verfahren erfolgt die Orientierung der Molekülketten innerhalb einer Düse, beispielsweise einer Breitschlitzdüse, indem Begrenzungsflächen des Massestroms innerhalb der Düse entsprechend geformt sind.

In der deutschen Offenlegungsschrift DE-A - 36 03 432 ist ein Strangpreßkopf zum Herstellen von Halbzeugen aus thermoplastischen Kunststoffen mit einem Fließkanal bekannt, wobei der Fließkanal in einem Teilbereich durch einen in axialer Richtung angeordneten Verdrängungskörper in wenigstens zwei Einzelkanäle teilbar ist und die Einzelkanäle unmittelbar vor der Fließkanalmündung wieder zusammengeführt sind. Der Verdrängungskörper weist mehrere, im wesentlichen parallel zueinander oder radial in Richtung auf einen gemeinsamen Schnittpunkt sowie jeweils gegenüber der Strömungsrichtung in dem Fließkanal und einem Winkel von beispielsweise 45° ausgerichtete Leiteinrichtungen auf. Die Endabschnitte des Verdrängungskörpers laufen keilförmig aufeinander zu. Die den einen Einzelkanal begrenzenden Leiteinrichtungen sind entgegengesetzt zu den den anderen Einzelkanal begrenzenden Leiteinrichtungen ausgerichtet. Bei diesem Strangpreßkopf werden aus dem aus einem Extruder austretenden plastifizierten Material zwei Filme erzeugt, die anschließend zusammengeführt werden. Durch den Verdrängungskörper wird der vom Extruder in den Strangpreßkopf eingeleitete Schmelzestrom in mindestens zwei Teilströme aufgeteilt, die durch getrennte Kanäle fließen. Durch die besondere Ausgestaltung und Anordnung der Leiteinrichtungen an dem Verdrängungskörper werden die Teilströme aus der ursprünglichen Richtung abgelenkt, wobei der eine Teilstrom bevorzugt gegenüber dem anderen Teilstrom in entgegengesetzter Richtung abgelenkt wird.

Aufgabe der Erfindung ist, ein Verfahren der eingangs beschriebenen Art zur Herstellung von Formkörpern aus thermotropen, flüssigkristallinen Kunststoffen mittels Extrusion so zu verbessern, daß die Vorzugsrichtungen der Kettenmoleküle der Polymere in beliebiger ein-, zwei- oder mehrachsiger Richtung orientiert sind und daß die mechanischen und sonstigen physikalischen Eigenschaften des Fertigproduktes weitgehend isotrop sind.

Diese Aufgabe wird erfindungsgemäß mit dem Verfahren nach Anspruch 1 gelöst.

Die weitere Ausgestaltung des Verfahrens ergibt sich aus den Merkmalen der Patentansprüche 4 bis 11.

Anspruch 12 betrifft eine erfindungsgemäße Vorrichtung zur Herstellung von Formkörpern aus thermotropen, flüssigkristallinen Stoffen mit definierter Orientierung der Ketten der LC-Polymermoleküle in mindestens zwei voneinander unabhängigen Vorzugsrichtungen.

In Ausgestaltung der Erfindung ist dem Adapter der gesamte Polymermassestrom aus dem Extruder über die beiden Schmelzeleitungen in zwei Teilströme zuführbar, zweigt die weitere Schmelzeleitung als Bypass von der einen Schmelzeleitung vor dem Adapter ab und ist an den Adapter an anderer Stelle als die Schmelzeleitung angeschlossen und fließt der eine Teilstrom über die Bypass-Schmelzeleitung und der andere Teilstrom über die eine Schmelzeleitung in den Adapter ein.

In einer anderen Ausführungsform der Vorrichtung ist die weitere Schmelzeleitung mit einem weiteren Extruder verbunden und bestehen die von den Extrudern über die Schmelzeleitungen dem Adapter zufließenden Teilströme aus unterschiedlichen Polymerschmelzen, die gleiche oder verschiedene Konstistent haben.

Weiterentwicklungen der Vorrichtung nach der Erfindung ergeben sich aus den Merkmalen der Patentansprüche 16 bis 27.

Formkörper, wie Folien, Platten, Form- und Flachteile, Profile aus thermotropen, flüssigkristallinen Kunststoffen mit definierter Orientierung der Ketten der LC-Polymermoleküle in mindestens zwei voneinander unabhängigen Vorzugsrichtungen werden nach dem Verfahren gemäß den Ansprüchen 1 bis 12 hergestellt.

Durch die Aufteilung des Polymermassestroms in zwei Teilströme, die beide einem Adapter zugeführt werden, in dem der eine Teilstrom als Polymermatrix die Grundlage des Formkorpers bildet und der andere Teilstrom mittels des rotierenden Verteilerelements in eine Vielzahl von Polymersträngen in Form von Helixen aufgeteilt wird, wobei diese Polymerstränge in die Polymermatrix des ersten Teilstroms eingelagert werden bzw. dieser überlagert werden, bilden diese Polymerstränge bei Umformung des Schmelzestroms in der Breitschlitzdüse eine mehrschichtige Verstärkungslage für die Polymermatrix, wobei die Polymerstränge in dieser mehrschichtigen Verstärkungslage in Vorzugsrichtungen orientiert sind, die sich im wesentlichen von der Vorzugsrichtung der Polymermatrix unterscheiden. Dadurch wird ein isotropes Eigenschaftsprofil des Formkörpers bzw. der Flachfolie erhalten.

Die Einzelheiten des Verfahrens sowie der Vorrichtung werden anhand der Zeichnungen näher erläutert. Es zeigen:
- Fig. 1: schematisch eine Vorrichtung aus einem Extruder, Adapter, Breitschlitzdüse und Kühlwalze zur Herstellung von Formkörpern,
- Fig. 2: eine Vorrichtung, ähnlich der Vorrichtung nach Fig. 1, mit einem weiteren Extruder,
- Fig. 3: einen Querschnitt durch den Adapter nach der Erfindung,
- Fig. 4: eine Ansicht eines Verteilerelements in Richtung "A" in Fig. 3, das Bestandteil des Adapters ist und
- Fig. 5a und 5b: im Querschnitt zwei Ausführungsformen von Flügeln des Verteilerelements entlang der Schnittlinie B-B in Fig. 4.

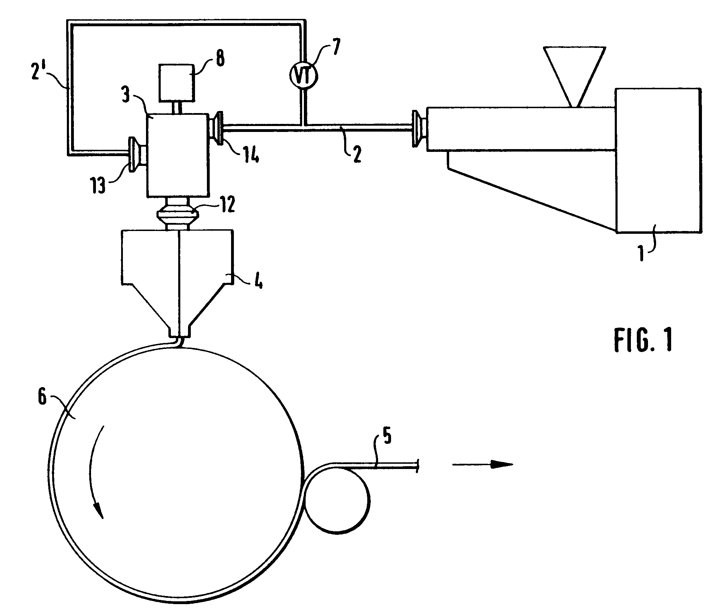

Die in Fig. 1 gezeigte Vorrichtung zur Herstellung mehrachsig orientierter Folien oder Platten aus thermotropen, flüssigkristallinen Polymeren enthält u.a. einen Extruder 1, der über Schmelzeleitungen 2 und 2' mit einem Adapter 3 in Verbindung steht. In die eine Schmelzeleitung 2' ist zwecks Regulierung der dem Adapter 3 zugeführten Schmelzeteilströme ein Drosselventil 7 eingebaut. Der Adapter 3 ist im Hinblick auf die Beeinflussung der eingespeisten Polymerschmelze mit einem drehzahlgeregelten Antriebsaggregat 8 ausgerüstet und unmittelbar an eine herkömmliche Breitschlitzdüse 4 angeflanscht. Der aus der Breitschlitzdüse austretende Schmelzefilm 5 wird auf einer Kühlwalze 6 unter seine Schmelztemperatur abgekühlt. Der verfestigte Schmelzefilm 5 kann entweder als fertige Folie aufgewickelt oder anschließenden Behandlungsschritten zugeführt werden.

Mit der Vorrichtung, wie sie in Fig. 1 schematisch dargestellt ist, wird der Polymermassestrom in zwei Teilströme aufgeteilt, denen beim Durchströmen des Adapters 3 vor dem Eintritt in die Breitschlitzdüse 4 Kräfte aufgeprägt werden, durch welche die LC-Polymerketten des ersten Teilstroms nur in eine Vorzugsrichtung orientiert werden. Die LC-Polymerketten des zweiten Teilstroms, der in eine Anzahl von Polymerstränge durch ein rotierendes Verteilerelement 21, das nachfolgend noch näher beschrieben werden wird, aufgeteilt wird, haben gegenüber den Polymerketten des ersten Teilstroms mehrere, voneinander abweichende Vorzugsrichtungen. Bei der Vorrichtung nach Figur 1 wird mit einem einzigen Extruder 1 gearbeitet, der über eine Schmelzeleitung 2 direkt mit dem Adapter 3 verbunden ist. Der Adapter 3 ist der Breitschlitzdüse vorgeschaltet. Von der Schmelzeleitung 2 zweigt vor dem Adapter 3 die weitere Schmelzeleitung 2' ab, die als Bypass zu dem Adapter ausgebildet ist und an den Adapter 3 an anderer Stelle als die Schmelzeleitung 2 angeschlossen ist, wobei diese Anschlußstelle sich auf der gegenüberliegenden Seite des Adapters zu der Anschlußstelle der Schmelzeleitung 2 befindet.

Die Polymerstränge des zweiten Teilstroms bilden infolge der Rotation des Verteilerelements 21 mehrgängige Helixen und werden unter verschiedenen Winkeln zur Strömungsrichtung der Polmyermatrix dem ersten Teilstrom überlagert bzw. in diesen eingelagert. Dabei können die Helixen der Polymerstränge mehrschichtig einander überlagert werden.

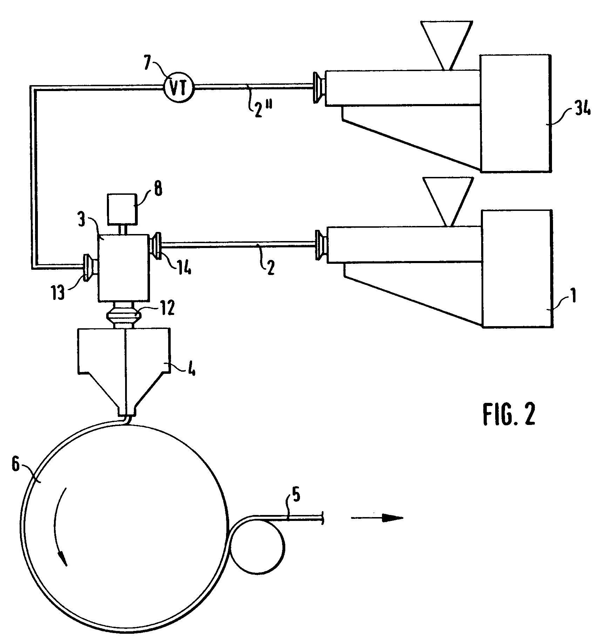

Die Vorrichtung nach Figur 2 unterscheidet sich von der Ausführungsform nach Figur 1 nur dadurch, daß ein weiterer Extruder 34 vorhanden ist, von dem eine Schmelzeleitung 2' zu dem Adapter 3 führt. Diese Schmelzeleitung 2' tritt an die Stelle der Schmelzeleitung 2' der Ausführungsform nach Figur 1. In der Schmelzeleitung 2' kann beispielsweise ein Drosselventil 7 vorhanden sein, das die Menge des vom Extruder 34 gelieferten Teilstroms regelt. Die übrigen Bestandteile der Vorrichtung in Figur 2 stimmen weitgehend mit den entsprechenden Bestandteilen der Ausführungsform nach Figur 1 überein und werden daher nicht nochmals beschrieben. Mit dieser Ausführungsform der Vorrichtung ist es vor allem möglich, den ersten und den zweiten Teilstrom aus chemisch unterschiedlichen thermotropen, flüssigkristallinen Polymeren einzusetzen, indem dem Extruder 1 ein anderes Polymer als dem Extruder 34 zugeführt wird. Ebenso ist es möglich, LC-Polymere mit anderen Polymeren mit dieser Vorrichtung zu kombinieren. Die Polymerstränge des zweiten Teilstroms können geometrisch gleich oder unterschiedlich geformt werden und runden, ovalen, quadratischen, rechteckigen oder sonstigen Querschnitt aufweisen. Der Mehrschicht-Schmelzestrom wird gegenüber seiner Strömungsachse in Form einer Helix radial umgelagert bzw. verdrillt. Dabei wird der Grad der radialen Umlagerung des Mehrschichtschmelzestroms über seine Strömungsgeschwindigkeit und über die Rotationsgeschwindigkeit des Verteilerelements 21 im Adapter 3 bestimmt. Beim Hindurchströmen durch den Adapter 3 werden dem ersten und dem zweiten Teilstrom Dehn- und Scherströmungen zur Orientierung der Kettenmoleküle des LC-Polymers bzw. des LC-Polymers und eines sonstigen Polymers in Vorzugsrichtungen aufgezwungen, wobei die beiden Teilströme gleiche oder unterschiedliche Orientierungen erhalten. Die Polymerströme des zweiten Teilstroms werden auf vorgegebenen Querschnittsebenen des ersten Teilstroms eingelagert, wobei ein Dickengradient eingestellt wird. Wie anhand der Zeichnungen noch näher erläutert werden wird, werden die Polymerstränge des zweiten Teilstroms im Gleich- oder Gegenstrom in die Polymermatrix des ersten Teilstroms eingelagert. Dabei können die Polymerstränge des zweiten Teilstroms mit gleichförmiger oder ungleichförmiger Drehgeschwindigkeit der Polymermatrix des ersten Teilstroms zugeführt werden.

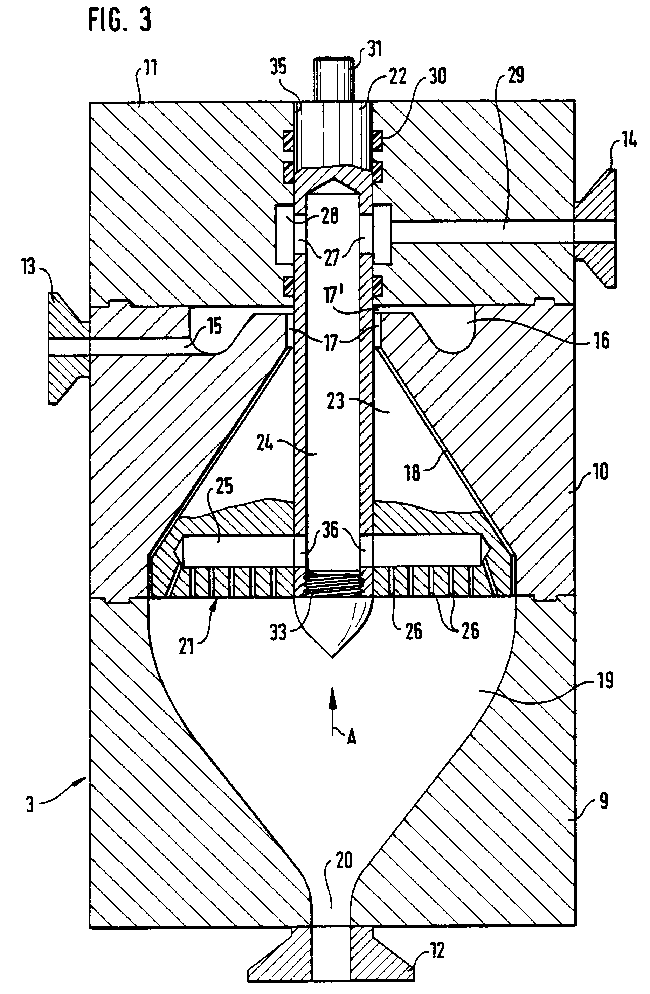

Der Adapter 3 besteht, wie Fig. 3 zeigt, im wesentlichen aus drei, durch nicht dargestellte Verbindungselemente, wie Schrauben, zu einem kompakten Block verbundenen Platten, zwei äußeren Abschlußplatten 9 und 11 sowie einer Mittenplatte 10. Während der Anschlußflansch 12 der Abschlußplatte 9 den Adapter 3 mit der Breitschlitzdüse 4 verbindet, ermöglichen die Flansche 13 und 14 den Anschluß des Adapters 3 an den Extruder 1 bzw. 34 über die Schmelzeleitungen 2 und 2' bzw. 2''. Ein Eintrittskanal 15 im Flansch 13 dient der Einspeisung eines eine Polymermatrix aufweisenden ersten Teilstroms in einen ringförmigen Verteilerkanal 16, der über zwei Düsenspalte 17, 17' mit einer Verteilerkammer 18 mit konischem Querschnitt in Verbindung steht, deren Querschnitt in der sich unmittelbar anschließenden, in die Abschlußplatte 9 eingearbeiteten Schmelzekammer 19 sich auf das Maß des Austrittskanals 20 einengt.

In der oberen Abschlußplatte 11 befindet sich ein Eintrittskanal 29 für den einen Teilstrom, während in der Mittenplatte 10 der dazu gegenüberliegende Eintrittskanal 15 für den anderen Teilstrom angeordnet ist.

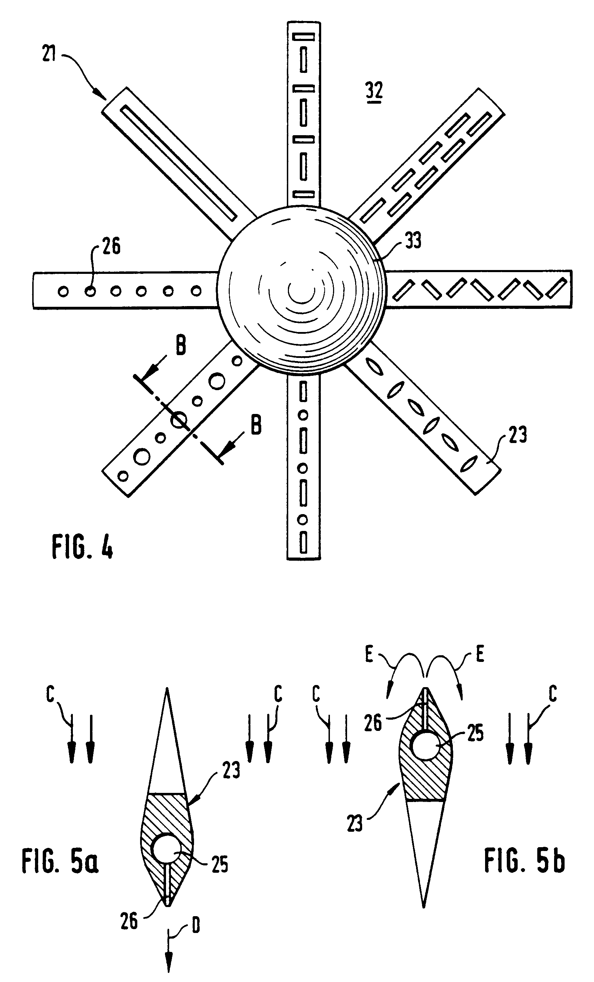

In der Verteilerkammer 18 rotiert das mit deren Konturen korrespondierende Verteilerelement 21, das aus einer Hohlwelle 22 sowie auf deren Umfang sternförmig angeordneten Flügeln 23 besteht. Gelagert ist die Hohlwelle 22 in einer in der Abschlußplatte 11 vorhandenen Bohrung 35. Die gemäß Fig. 5a und 5b nach strömungstechnischen Gesichtspunkten profilierten Flügel 23 weisen einen mit der Zentralbohrung 24 der Hohlwelle 22 in Verbindung stehenden Radialverteilerkanal 25 auf, von dem eine Vielzahl von Düsenkanälen 26 oder beliebig geformte Durchbrüche ausgehen, die im Staupunkt des Flügelprofils münden. Am entgegengesetzten Ende der Hohlwelle 22 sind entlang ihrem Umfang eine Anzahl von Öffnungen 27 angebracht, über die aus einem Ringkanal 28, der Verbindung zu einem Eintrittskanal 29 aufweist, die die Verstärkungsstruktur bildende Polymerschmelze in die Zentralbohrung 24 und letztendlich in die Düsenkanäle 26 gelangt. Ein torpedoähnlicher Gewindestopfen 33 verschließt die Zentralbohrung 24 zur Schmelzekammer 19 hin.

Die Zentralbohrung 24 der Hohlwelle 22 ist durch den Gewindestopfen 33 gegenüber der Schmelzekammmer 19 zu einem Stauraum verschlossen, der in Verbindung mit dem Radialverteilerkanal 25 steht.

Die Hohlwelle 22 ist in der Bohrung 35 fliegend drehbar gelagert, die sich zentral durch die obere Abschlußplatte 11 und die Mittenplatte 10 erstreckt. Die Zentralbohrung 24 der Hohlwelle 22 ist einerseits über die Öffnungen 27 in der Wand der Hohlwelle 22 und einen Ringkanal 28 in der oberen Abschlußplatte 11 mit dem Eintrittskanal 29 verbunden und steht andererseits über weitere Öffnungen 36 in der Hohlwellenwand mit dem Radialverteilerkanal 25 in der Mittenplatte 10 in Verbindung.

Über ein an einen Zapfen 31 der Hohlwelle 22 ankoppelbares, drehzahlgeregeltes und gegebenenfalls in der Drehrichtung umkehrbares Antriebsaggregat 8 wird das Verteilerelement 21 in Drehung versetzt. Um Schmelzeleckage längs der rotierenden Hohlwelle 22 zu unterbinden, sind in die Abschlußplatte 11 Dichtungen 30 eingefügt.

Die in Fig. 4 gezeigte Ausführungsform des Verteilerelements 21 ist beispielsweise mit acht Flügeln 23 bestückt. Diese Ausführungsform kann selbstverständlich im Sinne einer Anpassung an die jeweiligen Anforderungen, z.B. über Zahl und Form der Flügel bzw. Größe des freien Druchflußquerschnitts zwischen zwei Flügeln 23, variiert werden. Dasselbe gilt selbstverständlich auch für die Ausgestaltung der die Form der Polymerstränge vorgebenden, in die Flügel 23 eingearbeiteten Düsenkanäle 26. In bevorzugter Form können dies z.B. zylindrische Bohrungen gleichen oder unterschiedlichen Durchmessers, ovale Bohrungen sowie Schlitze unterschiedlicher Länge und Breite sein, deren geometrische Anordnung auf den Flügeln 23 von Flügel zu Flügel variieren kann, wie dies in Figur 4 schematisch gezeigt ist. Über die Querschnittsdimensionierung der Düsenkanäle 26 besteht die Möglichkeit, Einfluß auf die die Orientierung der Kettenmoleküle der Polymerschmelze und damit letztendlich die Festigkeit der fertigen Folie bestimmenden Dehn- und Scherströmungen der Polymerschmelze zu nehmen. Je nach geometrischer Anordnung der Düsenkanäle 26 auf den Flügeln 23 ermöglicht der Adapter 3 die Einstellung eines Orientierungsgradienten über die Dicke der fertigen Folie oder Platte. Werden z.B. nur am äußeren und inneren Durchmesser der Flügel 23 Düsenkanäle 26 angebracht, so wird im weitesten Sinne eine mehrschichtige Folie mit abwechselnd isotrop orientierten und anisotrop orientierten Schichten erhalten.

Die Flügel 23 sind radial über den Umfang der Hohlwelle 22 und achsparallel zu dieser angeordnet. Ebenso ist es möglich, die Flügel 23 unter einem gewissen Winkel zur Achse der Hohlwelle 22 auf deren Umfang anzuordnen. Die Düsenkanäle 26 aller Flügel 23 können auf gleichem oder von Flügel zu Flügel versetztem Teilkreis sich befinden.

Andere Ausführungsformen der Flügel 23 sind in den Figuren 5a und 5b gezeigt, die Schnitte entlang der Linie A-A in Figur 4 wiedergeben. In der Ausführungsform nach Figur 5a erfolgt die Einspritzung des die Polymermatrix verstärkenden Teilstroms im Gleichstrom mit der durch die freien Durchflußquerschnitte 32 hindurchströmenden Polymermatrix. Der Staupunkt des Flügels 23 nach Figur 5a liegt im Bereich der Austrittsöffnung des nach unten gerichteten Düsenkanals 26. Die Strömungsrichtung der Polymermatrix ist durch die Pfeile C angedeutet, während der Pfeil D die Strömungsrichtung der Polymerstränge des zweiten Teilstroms wiedergibt.

Im Fall der Ausführungsform nach Fig. 5b liegt der Staupunkt oben, d.h. im Bereich der Austrittsöffnung des Düsenkanals 26. Die Einspritzung des die Polymermatrix, die in Richtung des Pfeils C strömt, verstärkenden Teilstroms erfolgt im Gegenstrom zu der durch die freien Durchflußquerschnitte 32 hindurchströmenden Polymermatrix. Diese Maßnahme hat zur Folge, daß der im Staupunkt des Flügels 23 aus dem Düsenkanal 26 austretende Polymerstrang in jeweils zwei, den Flügel beidseitig umströmende Teilströme aufgetrennt wird, wie dies durch die Pfeile E in Fig. 5b angedeutet ist. Dadurch wird die Verstärkung der Polymermatrix durch die Polymerstränge erhöht und eine Steigerung der isotropen Eigenschaften der Folie bzw. der Dünnplatte erzielt.

Wie aus den Figuren 5a und 5b ersichtlich ist, wechseln sich auf den Flügeln 23 Bereiche, in denen Düsenkanäle 26 angebracht sind, mit Bereichen ab, in denen keine Düsenkanäle vorhanden sind. Die Bereiche, in denen Düsenkanäle 26 verlaufen, sind in den Figuren 5a und 5b schraffiert, während die Bereiche ohne Düsenkanäle nicht schraffiert sind.

Neben den vorgenannten Einflußgrößen spielt auch die Drehzahl des Verteilerelements 21 eine entscheidende Rolle hinsichtlich der Umorientierung des Schmelzestroms. In Abhängigkeit von der Strömungsgeschwindigkeit des Polymermatrixstromes läßt sich nämlich über die Drehzahl des Verteilerelements 21 primär die Steigung der Verstärkungshelixen und damit letztendlich deren Winkel gegenüber der Polymermatrix-Vorzugsrichtung in dem aus der Breitschlitzdüse 4 austretenden Schmelzefilm 5 steuern. Überraschenderweise erfährt die im Adapter 3 erzielte Orientierung der Kettenmoleküle keinerlei Veränderung bei der nachfolgenden Umformung der Polymermehrschichtschmelze in der Breitschlitzdüse. Veränderungen in Längsrichtung unterliegen ausschließlich die außenliegenden Polymerschichten, auf die infolge der Wandhaftung hohe Scherspannungen einwirken.

Der Erfindungsgedanke besteht im wesentlichen darin, eine gezielte ein-, zwei- oder mehrachsige Orientierung der Kettenmoleküle thermotroper, flüssigkristalliner Polymerschmelzen in einem Adapter zur Verbesserung der Gebrauchseigenschaften von Folien oder Platten zu erreichen. Das Verfahren arbeitet in einfacher, der Koextrusion weitgehend verwandter Weise. Dadurch können nicht nur Produkte aus einem einzigen flüssigkristallinen Polymer hergestellt werden, sondern es lassen sich auch unterschiedliche LC-Polymere miteinander als auch mit anderen Polymeren kombinieren.

Gemessen an anderen Verfahren, die den Einsatz technisch aufwendiger Spezialdüsen erfordern, kann der einfach aufgebaute Adapter mit jeder beliebigen Breitschlitzdüse gekoppelt werden. Das leichte Auswechseln des rotierenden Verteilerelementes gestattet im Bedarfsfall ein problemloses Anpassen des Adapters an die jeweiligen Verarbeitungsbedingungen bzw. das Erreichen der gewünschten Eigenschaften der zu verarbeitenden Folien und Formkörper.

## Patentansprüche

1. Verfahren zur Herstellung von Formkörpern aus thermotropen, flüssigkristallinen Kunststoffen mit definierter Orientierung der Ketten der LC-Polymermoleküle in mindestens zwei voneinander unabhängigen Vorzugsrichtungen, wobei der Polymer-Massestrom in zwei Teilströme aufgeteilt wird, denen Kräfte in der Weise aufgeprägt werden, daß die LC-Polymerketten des ersten Teilstroms nur in eine Vorzugsrichtung orientiert sind und die LC-Polymerketten des zweiten Teilstroms gegenüber denjenigen des ersten Teilstroms in zumindest eine andere davon abweichende Vorzugsrichtung orientiert sind und die beiden Teilströme vor dem Eintritt in eine Düse zusammengeführt werden, dadurch gekennzeichnet, daß die zwei Teilströme einen Adapter vor dem Eintritt in die Düse durchströmen, daß der erste Teilstrom des Polymermassestroms als Polymermatrix die Grundlage für den Formkörper bildet, daß die Vorzugsrichtung des ersten Teilstroms die Strömungsrichtung ist und daß der zweite Teilstrom in einzelne Polymerstränge aufgeteilt wird, die als mehrgängige Helixen die Polymermatrix des ersten Teilstroms überlagern bzw. in diese eingelagert werden.

2. Verfahren nach Anspruch 1, dadurch gekennzeichnet, daß die mehrgängigen Helixen der Polymerstränge unter verschiedenen Winkeln zur Strömungsrichtung dem ersten Teilstrom überlagert bzw. in diesen eingelagert werden und daß der erste Teilstrom durch die Helixen beim Zusammenführen der beiden Teilströme zu einem gemeinsamen Mehrschichtschmelzestrom verstärkt wird.

3. Verfahren nach Anspruch 1, dadurch gekennzeichnet, daß die Helixen der Polymerstränge mehrschichtig einander überlagert werden.

4. Verfahren nach Anspruch 1, dadurch gekennzeichnet, daß sowohl dem ersten Teilstrom, der die Polymermatrix bildet, als auch dem zweiten Teilstrom, der die Polymermatrix verstärkt, beim Hindurchströmen durch den Adapter Dehn- und Scherströmungen zur Orientierung der Kettenmoleküle des LC-Polymers in Vorzugsrichtungen aufgezwungen werden, wobei die beiden Teilströme gleiche oder unterschiedliche Orientierungen erhalten.

5. Verfahren nach den Ansprüchen 1 bis 4, dadurch gekennzeichnet, daß der Mehrschichtschmelzestrom gegenüber seiner Strömungsachse in Form einer Helix radial umgelagert bzw. verdrillt wird.

6. Verfahren nach den Ansprüchen 1 bis 5, dadurch gekennzeichnet, daß der Grad der radialen Umlagerung des Mehrschichtschmelzestroms über seine Strömungsgeschwindigkeit und die Rotationsgeschwindigkeit eines Verteilerelements im Adapter bestimmt wird.

7. Verfahren nach Anspruch 2, dadurch gekennzeichnet, daß die Polymerströme des zweiten Teilstroms auf vorgegebenen Querschnittsebenen des ersten Teilstroms eingelagert werden und daß dadurch ein Orientierungsgradient in Dickenrichtung eingestellt wird.

8. Verfahren nach den Ansprüchen 1 bis 7, dadurch gekennzeichnet, daß der erste und der zweite Teilstrom aus chemisch unterschiedlichen thermotropen, flüssigkristallinen Polymeren oder aus Kombinationen von LC-Polymeren mit anderen Polymeren bestehen.

9. Verfahren nach Anspruch 1, dadurch gekennzeichnet, daß die Polymerstränge des zweiten Teilstroms geometrisch gleich oder unterschiedlich geformt werden und runden, ovalen, quadratischen, rechteckigen oder sonstigen Querschnitt aufweisen.

10. Verfahren gemäß den Ansprüchen 1 bis 6, dadurch gekennzeichnet, daß die Polymerstränge des zweiten Teilstroms im Gleich- oder Gegenstrom in die Polymermatrix des ersten Teilstroms eingelagert werden.

11. Verfahren gemäß den Ansprüchen 1 und 2, dadurch gekennzeichnet, daß die Polymerstränge des zweiten Teilstroms mit gleichförmiger oder ungleichförmiger Drehgeschwindigkeit der Polymermatrix des ersten Teilstroms zugeführt werden.

12. Vorrichtung zur Herstellung von Formkörpern aus thermotropen, flüssigkristallinen Kunststoffen mit definierter Orientierung der Ketten der LC-Polymermoleküle in mindestens zwei voneinander unabhängigen Vorzugsrichtungen, mit zumindest einem Extruder (1), Schmelzeleitungen (2, 2', 2''), einer Breitschlitzdüse (4) und einer Kühlwalze (6), auf die der Formkörper in Gestalt einer Flachfolie oder einer dünnen biegsamen Platte extrudiert wird, wobei die eine Schmelzeleitung (2) den Extruder (1) mit einem Adapter (3) verbindet, an dem die weitere Schmelzeleitung (2', 2'') angeschlossen ist und der Adapter (3) der Breitschlitzdüse (4) vorgschaltet ist, dadurch gekennzeichnet, daß über die beiden Schmelzeleitungen (2; 2' bzw. 2'') zwei Teilströme von Polymerschmelzen zuführbar sind, denen im Adapter (3) voneinander unabhängige Vorzugsrichtungen aufgeprägt werden und die im Adapter einander überlagert werden, daß der Adapter (3) in einer konisch geformten Verteilerkammer (18) ein Verteilerelement (21) für die Aufteilung des zweiten Teilstroms in eine Anzahl von helixförmigen Polymersträngen enthält, daß das Verteilerelement (21) Flügel (23) aufweist und über seine Hohlwelle (22) mit einem Antriebsaggregat (8) verbunden ist, das über einen Zapfen (31) an der Hohlwelle (22) das Verteilerelement mit regelbarer Geschwindigkeit in Rotation versetzt.

13. Vorrichtung nach Anspruch 12, dadurch gekennzeichnet, daß dem Adapter (3) der gesamte Polymermassestrom aus dem Extruder (1) über die beiden Schmelzeleitungen (2; 2') in zwei Teilströmen zuführbar ist, daß die weitere Schmelzeleitung (2') als By-pass von der einen Schmelzeleitung (2) vor dem Adapter (3) abzweigt und an den Adapter (3) an anderer Stelle als die Schmelzeleitung (2) angeschlossen ist und daß der eine Teilstrom über die By-pass Schmelzeleitung (2') und der andere Teilstrom über die eine Schmelzeleitung (2) in den Adapter (3) einfließen.

14. Vorrichtung nach Anspruch 12, dadurch gekennzeichnet, daß die weitere Schmelzeleitung (2'') mit einem weiteren Extruder (34) verbunden ist und daß die von den Extrudern (1; 34) über die Schmelzeleitungen (2; 2'') dem Adapter (3) zufließenden Teilströme aus unterschiedlichen Polymerschmelzen bestehen, die gleiche oder verschiedene Konsistenz haben.

15. Vorrichtung nach Anspruch 12, dadurch gekennzeichnet, daß der Adapter (3) aus drei Platten besteht, von denen eine Mittenplatte (10) zu beiden Seiten von je einer Abschlußplatte (9 bzw. 11) eingefaßt ist, daß diese Platten (9, 10, 11) zu dem blockförmigen Adapter zusammengefügt sind, daß in der oberen Abschlußplatte (11) ein Eintrittskanal (29) für den einen Teilstrom und in der Mittenplatte (10) ein dazu gegenüberliegender Eintrittskanal (15) für den anderen Teilstrom angeordnet ist und daß in der unteren Abschlußplatte (9) eine sich verjüngende Schmelzekammer (19) mit einem mittig angeordneten Austrittskanal (20) vorhanden ist, der sich in einem Anschlußflansch (12) fortsetzt, über den der Adapter (3) mit der Breitschlitzdüse (4) verbunden ist.

16. Vorrichtung nach Anspruch 12, dadurch gekennzeichnet, daß die Hohlwelle (22) eine Zentralbohrung (24) aufweist und in einer Bohrung (35) fliegend drehbar gelagert ist, daß die Bohrung (35) sich zentral durch die obere Abschlußplatte (11) und die Mittenplatte (10) erstreckt, und daß die Zentralbohrung (24) einerseits über Öffnungen (27) in der Wand der Hohlwelle (22) und einen Ringkanal (28) in der oberen Abschlußplatte (11) mit dem Eintrittskanal (29) verbunden ist und andererseits über weitere Öffnungen (36) in der Hohlwellenwand mit einer Radialbohrung (25) in der Mittenplatte (10) in Verbindung steht.

17. Vorrichtung nach Anspruch 16, dadurch gekennzeichnet, daß die Zentralbohrung (24) der Hohlwelle (22) durch einen Gewindestopfen (33) gegenüber der Schmelzekammer (19) zu einem Stauraum verschlossen ist, der in Verbindung mit dem Radialverteilerkanal (25) steht, von dem eine Anzahl von axialen Düsenkanälen (26), angebracht in Flügeln (23) des Verteilerelements (21), zu der Schmelzekammer (19) führen.

18. Vorrichtung nach Anspruch 17, dadurch gekennzeichnet, daß die Konturen der Flügel (23) dem Verlauf der konischen Wände der Verteilerkammer (18) angepaßt sind.

19. Vorrichtung nach Anspruch 15, dadurch gekennzeichnet, daß die Eintrittskanäle (15, 29) des Adapters (3) für die Teilströme über Flansche (13, 14) mit den Schmelzeleitungen (2, 2' bzw. 2, 2'') verbunden sind.

20. Vorrichtung nach Anspruch 17, dadurch gekennzeichnet, daß die Flügel (23) radial über den Umfang der Hohlwelle (22) und achsparallel zur Hohlwelle (22) angeordnet sind.

21. Vorrichtung nach Anspruch 17, dadurch gekennzeichnet, daß die Flügel (23) unter einem gewissen Winkel zur Achse der Hohlwelle (22) auf deren Umfang angeordnet sind.

22. Vorrichtung nach Anspruch 17, dadurch gekennzeichnet, daß die Anzahl, geometrische Form und der Winkel zwischen zwei benachbarten Flügeln (23) so gewählt sind, daß im freien Druchflußquerschnitt (32) zwischen zwei benachbarten Flügeln definierte Dehn- und Scherströmungen herrschen.

23. Vorrichtung nach Anspruch 17, dadurch gekennzeichnet, daß die Düsenkanäle (26) in allen Flügeln (23) gleiche oder unterschiedliche Querschnitte haben.

24. Vorrichtung nach Anspruch 23, dadurch gekennzeichnet, daß die Düsenkanäle (26) runde, ovale, quadratische, rechteckige oder andere geometrische Querschnitte aufweisen, die in wechselnder Anordnung auf dem einzelnen Flügel vorhanden sind.

25. Vorrichtung nach Anspruch 23, dadurch gekennzeichnet, daß die Düsenkanäle (26) aller Flügel (23) auf gleichem oder von Flügel zu Flügel versetztem Teilkreis angeordnet sind.

26. Vorrichtung nach Anspruch 17, dadurch gekennzeichnet, daß die Düsenkanäle (26) in den Flügel (23), entweder in Strömnungsrichtung oder gegen die strömungsrichtung der Polymermatrix, gerichtet sind.

27. Vorrichtung nach Anspruch 17, dadurch gekennzeichnet, daß sich auf den Flügeln (23) Bereiche, in denen Düsenkanäle (26) angebracht sind, mit Bereichen abwechseln, in denen keine Düsenkanäle vorhanden sind.

## Claims

1. A process for the production of moldings from thermotropic, liquid-crystalline plastics having a defined orientation of the chains of LC polymer molecules in at least two preferred directions independent of one another, wherein the polymer melt stream is divided into two part streams which are subjected to forces in such a way that the LC polymer chains of the first part stream are oriented only in one preferred direction and the LC polymer chains of the second part stream are oriented in at least one other, different preferred direction relative to those of the first part stream, and the two part streams are combined before entering a die, characterized in that the two part streams flow through an adapter before entering the die, that the first part stream of the polymer melt stream, as the polymer matrix, forms the base of the molding, that the preferred direction of the first part stream is the direction of flow and that the second part stream is divided into individual polymer strands which, as multiple-pitch helices, are superposed on, or incorporated in, the polymer matrix of the first part stream.

2. The process as claimed in claim 1, wherein the multiple-pitch helices of the polymer strands superimposed on, or incorporated in, the first part stream at different angles with respect to the direction of flow, and the first part stream is reinforced by the helices when the two part streams are combined to form a common multilayer melt stream.

3. The process as claimed in claim 1, wherein the helices of the polymer strands are superimposed one on top of the other to form a multilayer structure.

4. The process as claimed in claim 1, wherein strain and shear flows for orienting the chain molecules of the LC polymer in the preferred directions are imposed on the first part stream, which forms the polymer matrix, and on the second part stream, which reinforces the polymer matrix, during flow through the adapter, the two part streams being given the same or different orientations.

5. The process ad claimed in any of claims 1 to 4, wherein the multilayer melt stream is radially displaced or twisted in the form of a helix with respect to its flow axis.

6. The process as claimed in any of claims 1 to 5, wherein the degree of radial displacement of the multilayer melt stream is determined by means of its flow rate and the rotary speed of the distributing element in the adapter.

7. The process as claimed in claim 2, wherein the polymer streams of the second part stream are incorporated in predetermined cross-sectional planes of the first part stream, and an orientation gradient in the thickness direction is thus established.

8. The process as claimed in any of claims 1 to 7, wherein the first and the second part streams comprise chemically different thermotropic, liquid-crystalline polymers or combinations of LC polymers with other polymers.

9. The process as claimed in claim 1, wherein the polymer strands of the second part stream have the same geometric shape or different geometric shapes and have a circular, oval, square, rectangular or other cross-section.

10. The process as claimed in any of claims 1 to 6, wherein the polymer strands of the second part stream are incorporated cocurrent or countercurrent in the polymer matrix of the first part stream.

11. The process as claimed in claims 1 and 2, wherein the polymer strands of the second part stream are fed to the polymer matrix of the first part stream with a uniform or nonuniform rotary speed.

12. An apparatus for the production of moldings from thermotropic, liquid-crystalline plastics having a defined orientation of the chains of the LC polymer molecules in at least two preferred directions independent of one another, said apparatus comprising at least one extruder (1), melt lines (2, 2', 2''), a slot die (4) and a cooling roller (6) onto which the molding is extruded in the form of a flat film or of a thin flexible sheet, whereby one of the melt lines (2) connects the extruder (1) to an adapter (3) to which the fitter melt line (2', 2'') is connected, and the adapter is upstream of the slot die, characterized in that two part streams of polymer melts can be fed via the two melt lines (2; 2', 2''), preferred directions independent of one another being imposed on said part streams in the adapter (3) and said part streams being superimposed one on top of the other in the adapter, that the adapter contains, in a conically shaped distribution chamber (18), a distributing element (21) for dividing the second part stream into a plurality of helically shaped polymer strands, that said distributing element (21) has blades (23) and, via its hollow shaft (22), is connected to a drive unit (8) which causes the distributing element to rotate at a controllable speed via a journal (31) on the hollow shaft (22).

13. The apparatus as claimed in claim 12, wherein the total polymer melt stream from the extruder (1) can be fed to the adapter (3) via the two melt lines (2; 2') in two part streams, the further melt line (2') branches, as a bypass, from one melt line (2) upstream of the adapter (3) and is connected to the adapter (3) at a different point with respect to the melt line (2), and one part stream flows via the bypass melt line (2') and the other part stream via one melt line (2) into the adapter (3).

14. The apparatus as claimed in claim 12, wherein the further melt line (2'') is connected to a further extruder (34) and the part streams flowing from the extruder (1; 34) via the melt lines (2; 2'') to the adapter (3) consist of different polymer melts which have the same consistency or a different consistency.

15. The apparatus as claimed in claim 12, wherein the adapter (3) comprises three plates, a central plate (10) from among these being held on either side by an end plate (9 and 11), these plates (9, 10, 11) are combined to form the block-shaped adapter, an inlet channel (29) for one part stream is arranged in the upper end plate (11) and an opposite inlet channel (15) for the other part stream is arranged in the central plate (10), and a tapering melt chamber (19) having an outlet channel (20) arranged in the middle is present in the lower end plate (9), said outlet channel continuing in a connecting flange (12), by means of which the adapter (3) is connected to the slot die (4).

16. The apparatus as claimed in claim 12, wherein the hollow shaft (22) has a central hole (24) and is rotatably over-mounted in a hole (35), the hole (35) extends centrally through the upper end plate (11) and the central plate (10), and the central hole (24) is connected on the one hand via orifices (27) in the wall of the hollow shaft (22) and an annular channel (28) in the upper end plate (11) to the inlet channel (29) and on the other hand is connected via farther orifices (36) in the hollow shaft wall to a radial hole (25) in the central plate (10).

17. The apparatus as claimed in claim 16, wherein the central hole (24) of the hollow shaft (22) is sealed toward the melt chamber (19) by a rubber stopper (33) to form a stagnation space, which is connected to the radial distributing channel (25), from which a number of axial die channels (26), located in blades (23) of the distributing element (21), lead to the melt chamber (19).

18. The apparatus as claimed in claim 17, wherein the contours of the blades (23) are adapted to the contour of the conical walls of the distributing chamber (18).

19. The apparatus as claimed in claim 15, wherein the inlet channels (15, 19) of the adapter (3) for the part streams are connected by means of flanges (13, 14) to the melt lines (2, 2' or 2, 2'').

20. The apparatus as claimed in claim 17, wherein the blades (23) are arranged radially over the circumference of the hollow shaft (22) and parallel to the axis of the hollow shaft (22).

21. The apparatus as claimed in claim 17, wherein the blades (23) are arranged at a certain angle to the axis of the hollow shaft (22) on its circumference.

22. The apparatus as claimed in claim 17, wherein the number, geometric shape and angle between two adjacent blades (23) are chosen so that defined strain and shear flows prevail in the free flow cross-section (32) between two adjacent blades.

23. The apparatus as claimed in claim 17, wherein the die channels (26) in all blades (23) have the same or different cross-sections.

24. The apparatus as claimed in claim 23, wherein the die channels (26) have circular, oval, square, rectangular or ether geometric cross-sections, which are arranged alternately on the individual blade.

25. The apparatus as claimed in claim 23, wherein the die channels (26) of all blades (23) are arranged on the same arc or on an arc displaced from blade to blade.

26. The apparatus as claimed in claim 17, wherein the die channels (26) in the blades (23) are oriented either in the direction of flow or in a direction opposite to the direction of flow of the polymer matrix.

27. The apparatus as claimed in claim 17, wherein on the blades (23) regions in which die channels (26) are present alternate with regions in which there are no die channels.

## Revendications

1. Procédé pour la fabrication de pièces formées en matières plastiques cristaux liquides thermotropes ayant une orientation définie des chaînes des molécules de polymère cristal liquide dans au moins deux directions préférées indépendantes l'une de l'autre, caractérisé en ce que l'écoulement de matière du polymère est divisé en deux écoulements partiels qui sont soumis à des forces de manière à orienter les chaînes de polymère cristal liquide du premier écoulement partiel seulement dans une direction préférée, et à orienter les chaînes de polymère cristal liquide du deuxième écoulement partiel, dans au moins une autre direction préférée différente de celle du premier écoulement, et les deux écoulements partiels sont combinés avant l'entrée dans une filière, caractérisé en ce que, les deux écoulements partiels traversent un adaptateur avant de pénétrer dans la filière, en ce que le premier écoulement partiel du courant de matière de polymère, en tant que matrice de polymère, forme la base de la pièce formée, en ce que la direction préférée du premier écoulement partiel est la direction de l'écoulement et en ce que le deuxième écoulement partiel est divisé en filaments individuels de polymère, qui, sous forme d'hélices à pas multiples, superposent la matrice de polymère du premier écoulement partiel ou sont incorporés dans celle ci.

2. Procédé selon la revendication 1, caractérisé en ce qu'on superpose les hélices à pas multiples des filaments de polymère, sous différents angles par rapport à la direction de l'écoulement du premier courant partiel, au premier écoulement partiel, ou que les hélices sont incorporées à celui-ci, et en ce que le premier écoulement partiel est renforcé au moyen des hélices en combinant les deux écoulements partiels en un courant commun de matière fondue multicouche.

3. Procédé selon la revendication 1, caractérisé en ce que, les hélices des filaments de polymère sont superposées les uns sur les autres pour former une structure multicouche.

4. Procédé selon la revendication 1, caractérisé en ce que des écoulements induisant des contraintes d'élongation et de cisaillement pour orienter les molécules de chaîne du polymère cristal liquide dans des directions préférées, sont imposés aussi bien sur le premier écoulement partiel, qui forme la matrice de polymère, que sur le deuxième écoulement partiel, qui renforce la matrice du polymère, en passant à travers l'adaptateur, les deux écoulements partiels recevant des orientations identiques ou différentes.

5. Procédé selon les revendications 1 à 4, caractérisé en ce que l'écoulement de matière fondue multicouche est déplacé radialement ou torsadé en forme d'une hélice par rapport à son axe d'écoulement.

6. Procédé selon les revendications 1 à 5, caractérisé en ce que le degré de déplacement radial de l'écoulement de matière fondue multicouche est déterminé par sa vitesse d'écoulement et par la vitesse de rotation d'un élément de distribution dans l'adaptateur.

7. Procédé selon la revendication 2, caractérisé en ce que les écoulements de polymère du deuxième écoulement partiel sont incorporés dans des plans de coupe transversaux prédéterminés du premier écoulement partiel, et en ce qu'un gradient d'orientation est ainsi établi dans la direction de l'épaisseur.

8. Procédé selon l'une des revendications 1 à 7, caractérisé en ce que le premier et le deuxième écoulement partiel comprennent des polymères cristaux liquides thermotropes chimiquement différents ou des combinaisons de polymères cristaux liquides avec d'autres polymères.

9. Procédé selon la revendication 1, , caractérisé en ce que les filaments de polymère des deux écoulements partiels peuvent avoir la même forme géométrique ou une forme différente et présentent une section transversale ronde, ovale, carrée, rectangulaire ou autre.

10. Procédé selon les revendications 1 à 6, caractérisé en ce que les filaments de polymère du deuxième écoulement partiel sont incorporés à co-courant ou à contre-courant dans la matrice de polymère du premier écoulement partiel.

11. Procédé selon les revendications 1 et 2, caractérisé en ce que les filaments de polymère du deuxième écoulement partiel sont introduits dans la matrice de polymère du premier écoulement partiel avec une vitesse de rotation uniforme ou non uniforme.

12. Dispositif pour fabriquer des pièces formées en matières plastiques cristaux liquides thermotropes ayant une orientation définie des chaînes des molécules de polymère cristal liquide dans au moins deux directions préférées indépendantes l'une de l'autres comprenant au moins une extrudeuse (1), des lignes d'alimentation de matière fondue (2, 2', 2''), une buse à fente large (4) et un cylindre de refroidissement (6) sur lequel la pièce formée est extrudée en forme d'une feuille plate ou en forme d'une plaque fine flexible, dans lequel une première ligne d'alimentation de matière fondue (2) relie l'extrudeuse (1) à un adaptateur (3) auquel est raccordé l'autre ligne d'alimentation de matière fondue (2', 2''), l'adaptateur (3) étant disposé en amont de la buse à fente large (4), caractérisé en ce que, deux écoulements partiels de matière de polymère fondue peuvent être amenés via les deux lignes d'alimentation de matière fondue (2; 2' ou 2'') ,écoulements partiels auxquels des directions préférées indépendantes l'une de l'autre sont imposées dans l'adaptateur (3) et qui sont superposés l'un sur l'autre dans l'adaptateur, en ce que l'adaptateur (3) contient, dans une chambre (18) de distribution de forme conique, un élément de distribution (21) pour diviser le deuxième écoulement partiel en un certain nombre de filaments de polymère en forme d'hélices, en ce que l'élément de distribution (21) présente des ailes (23) et est relié via son arbre creux (22) à un équipement d'entraînement (8) qui met en rotation l'élément de distribution avec une vitesse réglée via un tourillon (31) agencé sur l'arbre creux (22).

13. Dispositif selon la revendication 12, caractérisé en ce que le courant total de matière de polymère provenant de l'extrudeuse (1) peut être amené en deux flux partiels à l'adaptateur (3) via les deux lignes d'écoulement de matière fondue (2; 2'), en ce que l'autre ligne d'écoulement de matière fondue (2') est branchée en dérivation, comme un by-pass, en amont de l'adaptateur (3) à la première ligne d'écoulement de matière fondue (2) et est connectée à l'adaptateur (3) à un autre point que la première ligne d'écoulement de matière fondue (2), et en ce qu'un flux partiel s'écoule via la ligne d'écoulement de matière fondue (2') en dérivation et l'autre flux partiel via la première ligne d'écoulement de matière fondue (2) dans l'adaptateur (3).

14. Dispositif selon la revendication 12, caractérisé en ce que l'autre ligne d'écoulement de matière fondue (2'') est reliée à une extrudeuse (34) supplémentaire et en ce que les flux partiels qui s'écoulent des extrudeuses (1; 34) via les lignes d'écoulement de matière fondue (2; 2'') jusqu'à l'adaptateur (3) sont constitués de différents polymères en fusion de qui ont la même consistance ou des consistances différentes.

15. Dispositif selon la revendication 12, caractérisé en ce que l'adaptateur (3) est constitué de trois plaques parmi lesquelles une plaque centrale (10) est fixée sur chacune des deux faces à une plaque d'extrémité (9 ou 11), en ce que des plaques (9, 10, 11) sont assemblées sous la forme d'un adaptateur en forme de bloc, en ce qu'un canal d'entrée (29) pour le premier flux partiel est ménagé dans la plaque d'extrémité supérieure (11) et un canal d'entrée (15) pour l'autre flux partiel est ménagé, à l'opposé du premier canal d'entrée dans la plaque centrale (10), et en ce qu'une chambre (19) de fusion conique ayant un canal de sortie (20) ménagé au milieu, est présente dans la plaque d'extrémité inférieure (9), ledit canal de sortie continuant en une bride de raccordement (12), au moyen de laquelle l'adaptateur (3) est relié à la buse à fente large (4).

16. Dispositif selon la revendication 12, caractérisé en ce que l'arbre creux (22) présente un alésage central (24) et est monté dans un perçage (35) de manière à pouvoir tourner librement, en ce que le perçage (35) s'étend de manière centrale à travers la plaque d'extrémité supérieure (11) et la plaque centrale (10), et en ce que l'alésage central (24) est en communication d'une part avec le canal d'entrée (29) via les orifices (27) ménagés dans la paroi de l'arbre creux (22) et un canal annulaire (28) ménagé dans la plaque d'extrémité supérieure (11) et d'autre part avec un perçage radial (25) ménagé dans la plaque centrale via des orifices supplémentaires (36) ménagés dans la paroi de l'arbre creux.

17. Dispositif selon la revendication 16, caractérisé en ce que, l'alésage central (24) de l'arbre creux (22) est fermé vis à vis de la chambre de matière fondue (19) par un bouchon (33) fileté pour former un espace stagnant qui est en communication avec le canal de distribution radiale (25), à partir duquel un certain nombre de canaux (26) de filières axiales, situées dans des ailes (23) de l'élément de distribution (21), conduisent à la chambre de matière fondue (19).

18. Dispositif selon la revendication 17, caractérisé en ce que les contours des ailes (23) sont adaptés au contour des parois coniques de la chambre de distribution (18).

19. Dispositif selon la revendication 15, caractérisé en ce que les canaux d'entrée (15, 19) de l'adaptateur (3) pour les écoulements partiels sont reliés au moyen de brides (13, 14) aux lignes d'alimentation de matière fondue (2, 2' et 2, 2'').

20. Dispositif selon la revendication 17, caractérisé en ce que les ailes (23) sont arrangées radialement sur le pourtour de l'arbre creux (22) et avec un axe parallèle à l'arbre creux (22).

21. Dispositif selon la revendication 17, caractérisé en ce que les ailes (23) sont agencées sous un certain angle par rapport à l'axe de l'arbre creux (22) sur le pourtour de celui-ci.

22. Dispositif selon la revendication 17, caractérisé en ce le nombre, la forme géométrique et l'angle entre deux ailes (23) voisines sont choisis de manière à ce que dans la section transversale (32) libre d'écoulement entre deux ailes voisines des écoulements règnent des contraintes définies d'élongation et de cisaillement.

23. Dispositif selon la revendication 17, caractérisé en ce que les canaux de filière (26) ménagés dans toutes les ailes (23) ont des sections transversales identiques ou différentes.

24. Dispositif selon la revendication 23, caractérisé en ce que les canaux de filière (26) présentent des sections transversales rondes, ovales, carrées, rectangulaires ou autres, qui sont présentes avec une disposition alternée sur l'aile individuelle.

25. Dispositif selon la revendication 23, caractérisé en ce que les canaux de filière (26) de toutes les ailes (23) sont disposés sur le même arc de cercle ou sur un arc de cercle décalé d'une lame à une autre lame.

26. Dispositif selon la revendication 17, caractérisé en ce que les canaux de filière (26) ménagés dans les ailes (23) sont diriges soit dans la direction de l'écoulement, soit dans la direction opposée à l'écoulement de la matrice de polymère.

27. Dispositif selon la revendication 17, caractérisé en ce que sur les ailes (23), des régions dans lesquelles sont disposés des canaux de filières (26), alternent avec des régions dans lesquelles il n'y a aucun canal de filière.
